# EUROPÄISCHE PATENTSCHRIFT

(11) **EP 3 067 244 B1**
(45) Veröffentlichungstag und Bekanntmachung des Hinweises auf die Patenterteilung: **23.06.2021**
(21) Anmeldenummer: 16155828.3
(22) Anmeldetag: 16.02.2016
(51) Int. Cl.: B60W 60/00, B60W 50/08, B60W 50/10, B60W 50/14, B60K 35/00, B60W 30/12, B60W 30/14, B60K 37/06

(54) **KRAFTFAHRZEUG MIT SITUATIONSADAPTIVEM AUTOMATISCHEM FAHRMODUS**
MOTOR VEHICLE WITH AUTOMATIC SITUATION ADAPTIVE DRIVE MODE
VEHICULE AVEC MODE DE CONDUITE S'ADAPTANT AUTOMATIQUEMENT A LA SITUATION

(30) Priorität: 13.03.2015 DE 102015204591
(43) Veröffentlichungstag der Anmeldung: 14.09.2016
(73) Patentinhaber: Volkswagen Aktiengesellschaft, 38440 Wolfsburg (DE)
(72) Erfinder: HARTKOPP, Oliver, 38436 Wolfsburg (DE); ROGGE-SOLTI, Agata, 38436 Wolfsburg (DE)

(56) Entgegenhaltungen:
- DE-A1-102007 022 086
- DE-A1-102012 002 304
- DE-A1-102012 002 306
- DE-A1-102012 205 343
- DE-A1-102012 213 965
- DE-A1-102013 012 779

## Beschreibung

Die Erfindung betrifft ein Kraftfahrzeug mit einer Steuervorrichtung, die selbsttätig eine Längsführung (Gasgeben und Bremsen) und/oder Querführung (Lenken) des Kraftfahrzeugs durchführt. Des Weiteren weist das Kraftfahrzeug eine berührungssensitive Eingabefläche auf, an welcher ein Benutzer des Kraftfahrzeugs eine Bedienhandlung ausführen kann. Zu der Erfindung gehört auch ein Verfahren zum Betreiben des Kraftfahrzeugs.

Bei einem Kraftfahrzeug mit der beschriebenen Steuereinrichtung für eine selbsttätige Längsführung und/oder Querführung kann die Situation entstehen, dass der Benutzer des Kraftfahrzeugs, d.h. bei deaktivierter Steuereinrichtung des Fahrers, sich vollständig einer so genannten Sekundäraufgabe widmet, beispielsweise dem Schreiben einer E-Mail oder dem Lesen eines Textes oder dem Schreiben eines Dokuments. Die Steuereinrichtung für die selbsttätige Führung des Kraftfahrzeugs kann währenddessen in eine Fahrsituation geraten, in welcher durch die Steuereinrichtung selbst nicht ermittelt werden kann, welches Fahrmanöver in dieser Fahrsituation geeignet oder vom Benutzer gewünscht ist. In bestimmten Situationen kann also ein hochautomatisches System aufgrund einer solchen Systemunsicherheit eine Entscheidung vom Benutzer erfordern. Andernfalls kann es sein, dass der Weiterbetrieb des automatischen Fahrmodus nicht mehr möglich ist, also die Steuereinrichtung den Fahrmodus deaktivieren oder abbrechen oder beenden muss und der Benutzer das Kraftfahrzeug wieder vollständig selbst führen muss.

Aus der DE 10 2010 022 620 A1 ist ein Kraftfahrzeug bekannt, das ein Fahrer dadurch führen kann, dass er mittels einer kreuzartig ausgestalteten Bedienanordnung immer das nächste Fahrmanöver vorgeben kann, das durch das Kraftfahrzeug ausgeführt werden soll. Am Ende jedes Fahrmanövers gibt der Fahrer durch Bedienen der Bedienanordnung das nächste Fahrmanöver vor. Die Ausführung der einzelnen Fahrmanöver geschieht automatisch durch das Kraftfahrzeug.

Aus der DE 10 2013 208 206 A1 ist eine Fahrzeug-Anzeigevorrichtung zum Hinweisen auf zukünftige automatisch durchgeführte Lenkeingriffe beschrieben. Auf diese Weise wird der geplante Lenkeingriff und damit der innere Zustand der automatischen Fahrtplanung auf intuitive und verständlicherweise dem Passagier angezeigt. Die Anzeigevorrichtung umfasst ein Lichtband, das an einem Lenkrad angeordnet sein kann.

Die DE 10 2012 002 304 A1 beschreibt eine Bedienvorrichtung für ein Fahrerassistenzsystem für eine vollautomatisierte Führung mit einer Steuereinrichtung und einer Benutzerschnittstelle einer Master-Slave-Anordnung. Über die Abbildung einer Regelstrecke in Form der Benutzerschnittstelle (Master) kann ein Fahrparameter zu dem momentan ausgeführten Fahrmanöver angepasst und ein neues Fahrmanöver getriggert werden. Dazu wird eine symbolhafte Projektion des Kraftwagens auf die Benutzerschnittstelle realisiert, sowie Restriktionen, die sich beim Einstellen von Farbparameterwerten oder Auswählen von Fahrmanövern aufgrund der aktuellen Umgebungsbedingungen des Kraftwagens ergeben.

Die DE 10 2007 022 086 A1 beschreibt einen Schalthebelkopf, der mit seinem ersten Endbereich an einem freien Ende eines Schalthebels zur Betätigung eines Getriebes eines Kraftfahrzeugs befestigt ist. In dem Schalthebelkopf ist eine zu einem dem ersten Endbereich entgegengesetzten zweiten Endbereich hin offene Aufnahme ausgebildet, in der eine Eingabeeinheit mit einer berührungssensitiven und/oder näherungssensitiven Eingabefläche angeordnet ist.

Der Erfindung liegt die Aufgabe zugrunde, einen automatischen Fahrmodus eines Kraftfahrzeugs auch dann aufrechterhalten oder weiter betreiben zu können, wenn eine Fahrsituation detektiert wird, die durch die Steuereinrichtung des Kraftfahrzeugs nicht selbsttätig bewältigt werden kann oder soll.

Die Aufgabe wird durch die unabhängigen Patentansprüche gelöst. Vorteilhafte Weiterbildungen der Erfindung ergeben sich durch die Merkmale der abhängigen Patentansprüche.

Durch die Erfindung ist ein Kraftfahrzeug bereitgestellt, das die eingangs beschriebene Steuereinrichtung aufweist, die einen ersten Fahrmodus aufweist, in welchem die Steuereinrichtung selbsttätig eine Längsführung und/oder Querführung des Kraftfahrzeugs durchführt. Mit anderen Worten ist die Steuereinrichtung dazu ausgelegt, einen teilautomatischen oder hochautomatischen oder vollautomatischen Fahrbetrieb bereitzustellen. Mit anderen Worten kann die Steuereinrichtung als Autopilot ausgestaltet sein. Des Weiteren ist in dem Kraftfahrzeug in an sich bekannter Weise eine Bedieneinrichtung bereitgestellt, die dazu ausgelegt ist, an einer berührungssensitiven Eingabefläche zumindest eine von einem Benutzer des Kraftfahrzeugs mittels eines Bedienobjekts, beispielsweise einer Hand, durchgeführte Bedienhandlung zu erfassen. Die berührungssensitive Eingabefläche kann z.B. als Touchpad ausgestaltet sein. Sie kann auch in das Bezugsmaterial eines Verkleidungsteiles des Fahrgastraumes oder eines Sitzpolsters eines Fahrzeugsitzes integriert sein. Sie kann z.B. auf der Grundlage von kapazitiven Näherungssensoren gebildet sein.

Um die Steuereinrichtung in der aufgabengemäßen Weise robuster auszugestalten, ist die Steuereinrichtung dazu ausgelegt, im ersten Fahrmodus, also während der automatischen Fahrzeugführung, zumindest eine Fahrsituation zu detektieren, in welcher für einen Weiterbetrieb des ersten Fahrmodus eine Entscheidung des Benutzers vorgesehen ist. Hierzu können mehrere entsprechende Fahrsituationen vordefiniert sein, mit denen die aktuelle Fahrsituation verglichen wird. Die Steuereinrichtung bricht in einer solchen Fahrsituation nicht einfach den Betrieb ab und übergibt die Fahrzeugführung an den Fahrer. Stattdessen wird zunächst die Fahrsituation nur detektiert. Insbesondere wird eine Fahrsituation detektiert, bei welcher die Steuereinrichtung nicht selbsttätig entscheiden kann oder soll, welches Fahrmanöver geeignet ist, um das Kraftfahrzeug gemäß dem Bedürfnis des Benutzers weiterzuführen. Mit anderen Worten ist für die zumindest eine detektierte Fahrsituation vorgesehen, dass für einen Weiterbetrieb des ersten Fahrmodus ein Benutzer eine Entscheidung trifft. Die Entscheidung stellt insbesondere eine Auswahl aus zumindest zwei Fahrmanövern dar. Mit dem ausgewählten Fahrmanöver reagiert dann die Steuereinrichtung auf die detektierte Fahrsituation. Die Entscheidung des Benutzers empfängt die Steuereinrichtung hierbei über die Eingabefläche, indem sie über die Eingabefläche eine die Entscheidung des Benutzers betreffende Bedieneingabe empfängt, also z.B. eine Auswahlgeste.

Durch die Erfindung ergibt sich der Vorteil, dass die Steuereinrichtung den ersten Fahrmodus nicht vollständig unterbrechen oder abbrechen muss, sondern die in Bezug auf die mögliche Fahrmanöver mehrdeutige Fahrsituation überbrücken oder überwinden kann, indem an der Eingabefläche die Bedieneingabe des Benutzers empfangen wird. Hierbei muss der Benutzer nur kurzzeitig seine Aufmerksamkeit wieder dem Fahrgeschehen oder dem Verkehr widmen, nämlich zum Entscheiden und zum Ausführen der Bedieneingabe. Danach kann er sich wieder der eingangs beschriebenen Sekundäraufgabe widmen, ohne das der erste Fahrmodus unterbrochen wurde.

Die Bedieneinrichtung ist dazu ausgelegt, zu erkennen, ob der Benutzer seine gesamte Handfläche auf die Eingabefläche auflegt oder ablegt. Die Integration der Eingabefläche in den Griff des Gangwahlhebels erkennt hierdurch das Umgreifen des Griffes. Die Bedieneinrichtung ist hierzu dazu ausgelegt, eine Größe eines gleichzeitig durch das Bedienobjekt, also insbesondere die Hand, berührten Flächenbereichs der Eingabefläche zu ermitteln. In Abhängigkeit von der ermittelten Größe wird dann durch die Bedieneinrichtung bei der Steuereinrichtung der erste Fahrmodus deaktiviert und ein zweiter Fahrmodus aktiviert, wobei im zweiten Fahrmodus die Längsführung und die Querführung durch den Benutzer durchzuführen sind. Mit anderen Worten wird wieder auf manuelles Führen des Kraftfahrzeugs zurückgeschaltet oder umgeschaltet. Dies geschieht, falls der Fahrer seine Hand auf der Eingabefläche ablegt, also eine Größe der Berührfläche oder des berührten Flächenbereichs größer als ein vorbestimmter Mindestwert ist.

Hierdurch ergibt sich der Vorteil, dass beispielsweise durch Ergreifen des Griffes des Gangwahlhebels der erste Fahrmodus deaktiviert wird. Dies ist aber auch zugleich diejenige Halteposition der Hand, die nötig ist, um das Kraftfahrzeug manuell zu führen. Somit sind keine zusätzlichen Überwachungselemente nötig, um sicherzustellen, dass der Fahrer nach Deaktivieren des ersten Fahrmodus auch eine für das Führen des Kraftfahrzeugs geeignete Körperhaltung oder Position innehat. Es handelt sich hierbei auch um eine intuitive Haltung, so dass der Lernaufwand gering ist und auch nur eine kurze oder gar keine Erklärung nötig ist.

Zu der Erfindung gehören auch Weiterbildungen, deren Merkmale zusätzliche Vorteile ergeben.

In einer Weiterbildung ist die Eingabefläche neben einem Fahrersitz des Kraftfahrzeugs angeordnet. Mit anderen Worten kann die Eingabefläche beispielsweise in einem Bereich der Mittelkonsole angeordnet sein oder in einem Bereich der Fahrertür. Insbesondere ist die Blickrichtung des Fahrers gemeint. Bei einem drehbaren Fahrersitz ist damit die Eingabefläche nicht nach dem Fahrzeug ausgerichtet, sondern nach dem Sitz und der Blickrichtung des Fahrers, wenn dieser im Fahrersitz sitzt und geradeaus blickt. Hier ergibt sich der Vorteil, dass der Fahrzeuginnenraum im Bereich vor dem Fahrer, also beispielsweise das Lenkrad, von dem Benutzer abgedeckt werden kann, indem er beispielsweise eine Zeitung oder ein Tablet-PC darauf ablegt. Dennoch bleibt die Eingabefläche zum Ausführen der Bedieneingabe frei zugänglich.

Eine Weiterbildung sieht vor, dass die Eingabefläche in ein anderes Bedienelement integriert ist. Hier ergibt sich der Vorteil, dass die Eingabefläche näher am Fahrersitz angeordnet werden kann, weil das andere Bedienelement als in den Fahrzeuginnenraum ragendes Trägerteil dienen kann.

In einer Weiterbildung ist die Eingabefläche an einem exponierten Ort im Kraftfahrzeug angeordnet. Unter exponiert ist dabei zu verstehen, dass die Eingabefläche zumindest eine der beiden folgenden Eigenschaften aufweist. Zum einen kann die Eingabefläche konvex in einen Fahrzeuginnenraum hineingewölbt sein. Die konvexe Wölbung oder Krümmung ist dabei in zumindest eine Raumrichtung ausgebildet. Mit anderen Worten kann die Eingabefläche beispielsweise die Form eines Halbzylinders oder bei einer konvexen Krümmung in zwei Raumrichtungen die Form einer Halblinse aufweisen. Beispielsweise kann die Eingabefläche an einer Armlehne des Fahrersitzes angeordnet sein. Zusätzlich oder alternativ dazu kann die Eingabefläche an einem Trägerteil angeordnet sein, das bezüglich einem das Trägerteil umgebenden Verkleidungsteil erhaben angeordnet ist. Mit anderen Worten ragt das Trägerteil mit der daran angeordneten Eingabefläche über das Verkleidungsteil hinaus in den Fahrzeuginnenraum hinein. Beispielsweise kann die Eingabefläche auf einem Sockel angeordnet sein. Durch die exponierte Anordnung der Eingabefläche ergibt sich der Vorteil, dass die Eingabefläche bezüglich der Umgebung erhaben in den Kraftfahrzeuginnenraum hineinragt und hierdurch eine Wahrscheinlichkeit einer Verdeckung der Eingabefläche durch herumliegende Gegenstände besonders gering ist.

In einer Weiterbildung ist die Eingabefläche in den Griff eines Gangwahlhebels integriert. Der Gangwahlhebel ist ein Schalthebel zum Bedienen eines mechanischen Getriebes oder eines Automatikgetriebes zu verstehen. Diese Weiterbildung weist den Vorteil auf, dass die Eingabefläche an einem besonders exponierten Ort angeordnet, der einen besonders geringen Abstand zur Hand des Benutzers im Fahrersitz aufweisen kann.

Besonders bevorzugt ist es hierbei, dass die Eingabefläche an einer Oberseite des Griffs angeordnet ist. Mit anderen Worten kann der Benutzer vom Fahrersitz aus durch Absenken seiner Hand auf den Gangwahlhebel die Eingabefläche erreichen. Hierdurch ergibt sich der Vorteil, dass die Eingabefläche in einer Bewegungsbahn angeordnet ist, die sich ergibt, wenn ein Fahrer seinen Arm von beispielsweise einer Zeitung oder einem Tablet-PC löst und ihn neben den Fahrersitz bewegt. Dies erspart dem Benutzer das Suchen der Eingabefläche, das heißt er kann die Bedienhandlung an der Eingabefläche auch ohne Hinsehen durchführen.

Insbesondere wird vorausgesetzt und erfasst, dass der Fahrer die Hand für eine vorbestimmte Mindestzeit, z.B. mehr als 1 Sekunde oder mehr als 2 Sekunden, auf der Eingabefläche ablegt.
In einer Weiterbildung ist die Bedieneinrichtung dazu ausgelegt, mehrere unterschiedliche Bediengesten als jeweilige Bedienhandlung an der Eingabefläche zu erkennen. Eine Bediengeste kann dabei jeweils beispielsweise das Antippen der Eingabefläche, eine Streichbewegung entlang der Eingabefläche, das Berühren der Eingabefläche mit einem Finger oder zwei Fingern oder drei Fingern sein. Diese Weiterbildung weist den Vorteil auf, dass mittels der einen Eingabefläche unterschiedliche Eingaben getätigt werden können und hierdurch zwischen einer Vielzahl von unterschiedlichen Entscheidungsmöglichkeiten oder Auswahlmöglichkeiten oder Fahrmanövern unterschieden werden kann, aus denen der Benutzer mit einer einzigen Bedienhandlung eine auswählen kann. Hierdurch erfolgt an der gleichen Stelle immer gleichartig und mit einfachen Prinzipien die Bedienung der Steuereinrichtung durch den Benutzer.

In einer Weiterbildung ist eine Ausgabeeinrichtung bereitgestellt, die dazu eingerichtet ist, eine die vom Benutzer erwartete Entscheidung beschreibende Ausgabe auszugeben. Beispielsweise kann die Ausgabeeinrichtung eine Anzeigeeinrichtung umfassen, beispielsweise einen Bildschirm oder eine Kopfoben-Anzeige (Head-up-Display). Die Ausgabeeinrichtung kann auch eine Audioausgabeeinrichtung sein, durch welche ein Sprachausgabe oder Sprachansage ausgegeben werden kann. Durch die Ausgabe können beispielsweise die möglichen Fahrmanöver beschrieben sein. Die Ausführungsform weist den Vorteil auf, dass die zu der mehrdeutigen Fahrsituation führende Systemunsicherheit dargestellt wird. Der Benutzer erkennt also, welche Fragestellung die Steuereinrichtung im Moment hat und kann sich auf die korrespondierende Situation im Verkehrsgeschehen konzentrieren.

In einer Weiterbildung ist die Ausgabeeinrichtung dazu eingerichtet, einen Bedienhinweis auszugeben, der die an der Eingabefläche ausführbaren Bedienhandlungen beschreibt. Hierdurch wird eine Fehlbedienung der Bedieneinrichtung unwahrscheinlicher.

In einer Weiterbildung ist an der Eingabefläche eine Leuchteinrichtung bereitgestellt. Die Steuereinrichtung ist dazu ausgelegt, im ersten Fahrmodus die Leuchteinrichtung immer nur dann in einem Aktivzustand oder Leuchtzustand zu betreiben, falls eine Fahrsituation erkannt ist, in welcher eine Entscheidung des Benutzers vorgesehen ist. Hierdurch ergibt sich der Vorteil, dass durch ein Aktivieren oder Aufblinken oder Aufleuchten der Leuchteinrichtung dem Benutzer in seinem peripheren Sichtfeld bereits signalisiert werden kann, dass eine Entscheidung von ihm verlangt wird.

In einer Weiterbildung weist die Leuchteinrichtung einen die Eingabefläche vollständig umrandenden Leuchtstreifen auf. Mit anderen Worten ist die Eingabefläche von einem Leuchtband umgeben. Hierdurch ergibt sich der Vorteil, dass die Eingabefläche auch bei unbeleuchtetem Kraftfahrzeuginnenraum z.B. nachts durch ein leuchtendes Band oder einen leuchtenden Rahmen abgegrenzt und hierdurch erkennbar ist.

In einer Weiterbildung ist die Leuchteinrichtung dazu ausgelegt, unterschiedliche Leuchtfarben zu erzeugen. Die Steuereinrichtung ist dazu ausgelegt, in Abhängigkeit von der erkannten Fahrsituation eine der Leuchtfarben auszuwählen und die ausgewählte Leuchtfarbe bei der Leuchteinrichtung einzustellen. Hierdurch kann zwischen unterschiedlichen Graden oder Werten der Brisanz einer Fragestellung des Kraftfahrzeugs unterschieden werden. Ist beispielsweise zwingend eine Entscheidung des Nutzers nötig, weil sonst der erste Fahrmodus definitiv abgebrochen werden muss, so kann eine erste Leuchtfarbe, beispielsweise Rot, ausgewählt werden. Ist dagegen die Entscheidung des Benutzers nur optional, weil die Steuereinrichtung beispielsweise das aktuell durchgeführte Fahrmanöver auch einfach weiterführen kann und der Benutzer mit seiner Entscheidung lediglich ein alternatives Fahrmanöver auswählen kann, so kann eine andere Leuchtfarbe, beispielsweise Blau oder Grün, ausgewählt werden. Es kann auch ein dynamischer Farbwechsel vorgesehen sein, z.B. von blau nach rot, um beispielsweise eine verbleibende Zeit bis zu einer Funktionsauslösung, beispielsweise einer manuellen Übernahme der Fahrzeugführung, zu signalisieren. Es kann auch ein Countdown angezeigt oder angesagt werden, um die Funktionsauslösung anzukündigen.

In einer Weiterbildung ist zumindest eine Anzeigeeinrichtung zum Anzeigen zumindest eines graphischen Objekts neben der Eingabefläche angeordnet und/oder in die Eingabefläche integriert ist. Unter einem graphischen Objekt ist beispielsweise ein Symbol oder ein Text oder eine farbige Fläche zu verstehen. Die Anzeigeinrichtung kann hierzu beispielsweise eine Pixelmatrix aufweisen.

In einer Weiterbildung ist die Bedieneinrichtung ausschließlich für das Empfangen der die Entscheidung des Benutzers betreffenden Bedieneingabe in dem Kraftfahrzeug vorgesehen. Dies kann zumindest im ersten Fahrmodus oder sogar dauerhaft oder immer so vorgesehen sein. Dies verbessert die
Orientierung des Benutzers beim Bedienen des Kraftfahrzeugs.

Das erfindungsgemäße Kraftfahrzeug ist bevorzugt als Kraftwagen, insbesondere als Personenkraftwagen oder Lastkraftwagen ausgestaltet.

Zu der Erfindung gehört auch ein Verfahren zum Betreiben des erfindungsgemäßen Kraftfahrzeugs. In der beschriebenen Weise wird im ersten Fahrmodus selbsttätig das Kraftfahrzeug längsgeführt oder quergeführt, was durch die Steuereinrichtung durchgeführt wird. Im ersten Fahrmodus wird dabei zumindest eine Fahrsituation detektiert, in welcher für einen Weiterbetrieb des ersten Fahrmodus eine Entscheidung des Benutzers vorgesehen ist. Es wird an einer berührungssensitiven Eingabefläche eine Bedienhandlung erfasst, die der Benutzer mittels eines Bedienobjekts, beispielsweise einer Hand, an der Eingabefläche durchführt. Die Erfassung erfolgt durch die Bedieneinrichtung. Die Bedieneingabe betrifft dabei die Entscheidung des Benutzers, also beispielsweise einer Auswahl eines von mehreren in der Fahrsituation durch die Steuereinrichtung durchführbaren Fahrmanövers. Es wird eine Größe eines gleichzeitig durch das Bedienobjekt berührten Flächenbereichs der Eingabeflächen ermittelt, und in Abhängigkeit von der ermittelten Größe ein Deaktivieren des ersten Fahrmodus und ein Aktivieren des zweiten Fahrmodus, in welchem die Längsführung und die Querführung durch den Benutzer durchzuführen ist, durchgeführt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund werden die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine schematische Darstellung des Kraftfahrzeugs in einer detektierten mehrdeutigen Fahrsituation,
- Fig. 3: eine schematische Darstellung des Kraftfahrzeugs während einer Bedienhandlung eines Benutzers,
- Fig. 4: eine Skizze zu einem Bewegungsablauf des Bedienobjekts des Benutzers während einer ersten Bedienhandlung,
- Fig. 5: eine Skizze zu einem Bewegungsablauf des Bedienobjekts während einer zweiten Bedienhandlung,
- Fig. 6: eine Skizze zu einem Bewegungsablauf des Bedienobjekts während einer dritten Bedienhandlung,
- Fig. 7: eine Skizze zu einem Bewegungsablauf des Bedienobjekts während einer vierten Bedienhandlung,
- Fig. 8: eine Skizze zu einem Bewegungsablauf des Bedienobjekts während einer siebten Bedienhandlung,
- Fig. 9: eine Skizze des Bedienobjekts bei einer Bedienhandlung zum Beenden eines automatischen Fahrmodus des Kraftfahrzeugs.
- Fig. 10: eine schematische Darstellung einer Bedieneinrichtung einer Ausführungsform des erfindungsgemäßen Kraftfahrzeugs, bei welchem die berührungssensitive Eingabefläche eine Anzeigeeinrichtung aufweist.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

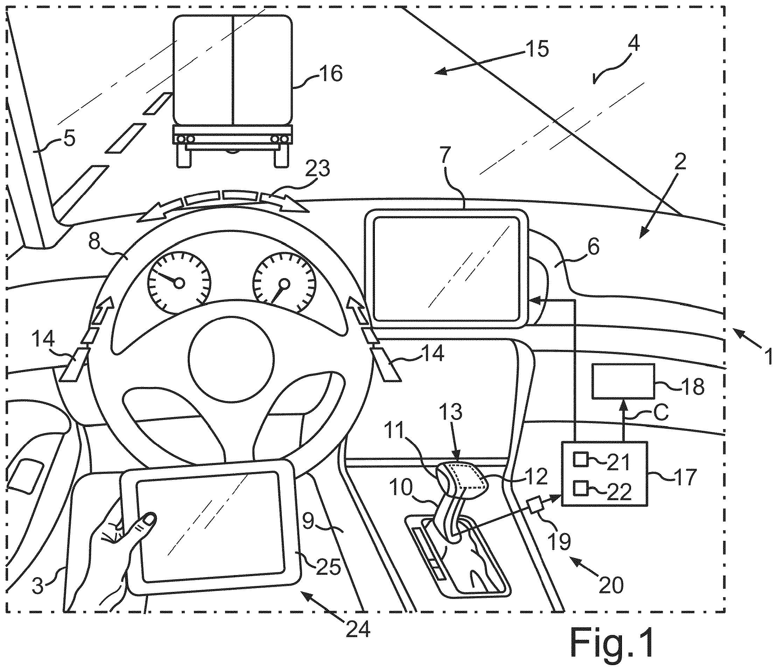

Fig. 1 zeigt von einem Kraftfahrzeug 1 einen Fahrzeuginnenraum 2. Bei dem Kraftfahrzeug 1 kann es sich beispielsweise um einen Kraftwagen, insbesondere einem Personenkraftwagen handeln. Nur beispielhaft ist das dargestellte Kraftfahrzeug 1 ein Linkslenker. Der Fahrzeuginnenraum 2 ist aus einer Perspektive eines (nicht dargestellten) Fahrers oder Benutzers des Kraftfahrzeugs 1 dargestellt. Der Benutzer kann in einem Fahrersitz 3 des Kraftfahrzeugs sitzen. Gezeigt sind des Weiteren eine Windschutzscheibe 4, eine A-Säule 5, ein Armaturenbrett 6, eine Anzeigevorrichtung 7, die in dem Armaturenbrett 6 angeordnet sein kann, ein Lenkrad 8, eine Mittelkonsole 9 und ein Schalthebel oder Gangwahlhebel 10. Der Gangwahlhebel 10 kann einen Griff 11 aufweisen. In den Griff 11 kann eine berührungssensitive Eingabefläche 12 integriert sein, beispielsweise an einer Oberseite 13 des Griffes 11. Die Eingabefläche 12 befindet sich somit in Vorwärtsfahrrichtung 14 des Kraftfahrzeugs 1 neben dem Fahrersitz 3. Die Vorwärtsfahrrichtung 14 repräsentiert in der Fig. 1 die Fahrzeuglängsachse. Der Schalthebel 10 stellt einen exponierten Ort dar. Der Schalthebel 10 stellt auch ein Trägerteil für die Eingabefläche 12 dar. Der Schalthebel 10 ist bezüglich der Mittelkonsole 9 erhaben. Die Mittelkonsole 9 stell ein Verkleidungsteil dar, in welchem der Schalthebel 10 angeordnet ist.

Durch die Frontscheibe 4 hindurch ist von eine Fahrsituation 15 erkennbar. Beispielsweise kann ein vorausfahrendes Fahrzeug 16 langsamer fahren als das Kraftfahrzeug 1. Beispielsweise fährt das Kraftfahrzeug 1 auf das Fahrzeug 16 auf oder nähert sich diesem.

Das Kraftfahrzeug 1 kann durch eine Steuereinrichtung 17 geführt sein, bei der es sich beispielsweise um ein Steuergerät oder eine Prozessoreinrichtung des Kraftfahrzeugs handeln kann. Durch die Steuereinrichtung 17 können Steuerbefehle C erzeugt werden, durch welche eine Führungseinrichtung 18 des Kraftfahrzeugs gesteuert sein kann. Die Führungseinrichtung 18 kann beispielsweise in an sich bekannter Weise einen Aktor zum Lenken für eine Querführung und/oder eine Aktoreinrichtung zum Steuern der Bremsen und/oder des Motors des Kraftfahrzeugs für eine Längsführung umfassen.

Über die Anzeigeeinrichtung 7 kann die Steuereinrichtung 17 mit dem Benutzer kommunizieren. Beispielsweise können hier Aktionsoptionen angezeigt werden. Die Anzeigeeinrichtung 17 kann hierzu beispielsweise einen Bildschirm umfassen. Die Eingabefläche 12 kann mit einer Auswerteeinrichtung 19 gekoppelt sein, durch welche eine an der Eingabefläche 12 ausgeführte Berührungsgeste erkannt werden kann. Die Eingabefläche 12 und die Auswerteeinrichtung 19 stellen zusammen eine Bedieneinrichtung 20 dar. Die Auswerteeinrichtung 19 kann beispielsweise durch eine Prozessoreinrichtung oder eine Mikrocontrollerschaltung realisiert sein. Die Bedieneinrichtung 20 kann mit der Steuereinrichtung 17 gekoppelt sein.

Die Steuereinrichtung 17 kann einen automatischen Fahrmodus 21 aufweisen, in welchem die Steuereinrichtung 17 die Steuerbefehle C für die Längsführung und/oder Querführung in an sich bekannter Weise erzeugt. Des Weiteren kann die Steuereinrichtung 17 einen manuellen Fahrmodus 22 aufweisen, in welchem der Fahrer das Kraftfahrzeug selbst längsführen und querführen muss. Des Weiteren können weitere (nicht dargestellte) Fahrmodi bereitgestellt sein, die sich von dem Fahrmodus 21 (automatischer Fahrmodus) darin unterscheiden, dass jeweils ein Grad der Automatisierung anders ist. Es kann beispielsweise eine selbständige Längsführung in einem Fahrmodus, eine selbständige Längs- und Querführung in einem zweiten Fahrmodus und eine selbständige Querführung in einem dritten Fahrmodus vorgesehen sein.

In einem hochautomatischen Fahrmodus, in welchem die Steuereinrichtung 17 sowohl die Längsführung als auch die Querführung durchführt, kann das Lenkrad 8 eingefahren sein, also vom Fahrer weggestellt oder wegbewegt sein. Hierbei kann das Lenkrad 8 weiterhin selbständige Lenkbewegungen 23 ausführen. Durch das Wegschwenken des Lenkrads ist für den Fahrer im hochautomatischen Fahrmodus mehr Freiraum zum Durchführen einer Sekundärtätigkeit 24 bereitgestellt. Der Fahrer kann mit der Sekundärtätigkeit 24 beschäftigt sein und braucht die Fahraufgabe nicht zu überwachen. Die Sekundärtätigkeit 24 kann beispielsweise darin bestehen, dass der Fahrer auf einen Tablet-PC 25 einen Text liest oder beispielsweise E-Mails schreibt.

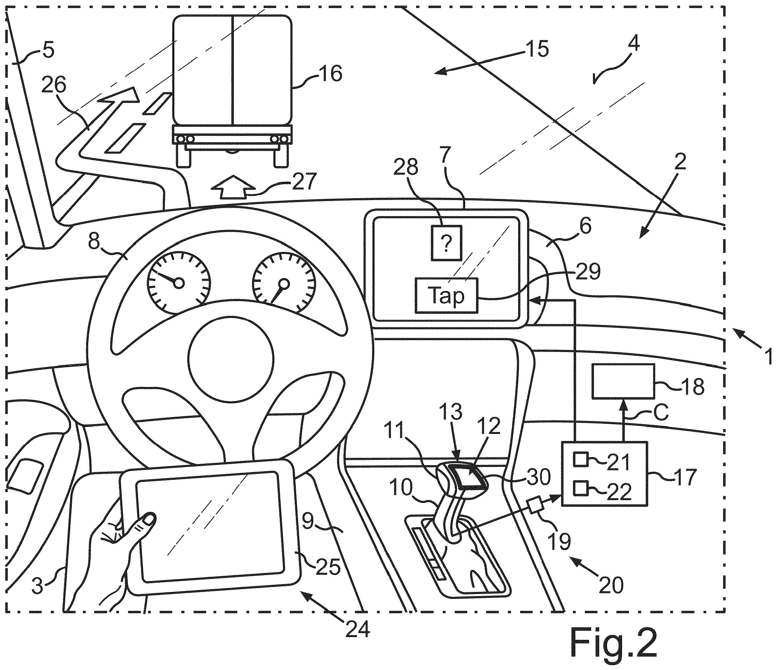

Die Fig. 2 veranschaulicht, wie die Steuereinrichtung 17 auf die Fahrsituation 15 reagieren kann. Durch die Steuereinrichtung 17 kann die Fahrsituation 15 dahingehend ausgewertet werden, dass es zwei mögliche Fahrmanöver, nämlich ein Überholmanöver 26 und ein Folgemanöver 27 bezüglich des Fahrzeugs 16 gibt. Bei der Steuereinrichtung 17 kann vorgesehen sein, dass durch den Fahrer zu entscheiden ist, welches Fahrmanöver 26, 27 durchzuführen ist. Die Steuereinrichtung 17 kann über die Ausgabeeinrichtung 7 dem Fahrer beispielsweise eine Ausgabe 28 ausgeben, die beispielsweise die Frage sein kann: "Möchten Sie überholen?". Des Weiteren kann ein Bedienhinweis 29 ausgegeben werden, der beispielsweise besagen kann: "Bitte bestätigen mit einem Tap". Mit anderen Worten wird der Benutzer aufgefordert, sich zu entscheiden, ob er das Überholmanöver 26 durchgeführt bekommen möchte. Hierzu muss er dann gemäß dem Bedienhinweis 29 die Eingabefläche 12 antippen, wenn er sich z.B. für das Überholmanöver 26 entscheidet.

Die Bedieneinrichtung 20 kann des Weiteren eine Leuchteinrichtung 30 aufweisen, die durch die Steuereinrichtung 17 dann aktiviert werden kann, wenn der Benutzer eine Entscheidung treffen soll, also eine Bedienhandlung an der Eingabefläche 12 vornehmen soll, um ein Fahrmanöver auszuwählen oder zu bestätigen. Die Leuchteinrichtung 30 kann beispielsweise einen Rahmen darstellen, welche die Eingabefläche oder die Eingabefläche 12 einrahmt oder umgibt. Die Leuchteinrichtung 30 kann auch unterschiedliche Leuchtfarben aufweisen, die durch die Steuereinrichtung 17 eingestellt werden können, um beispielsweise einen Grad der Dringlichkeit oder einen Wert für eine Dringlichkeit der vom Benutzer benötigten Entscheidung zu signalisieren.

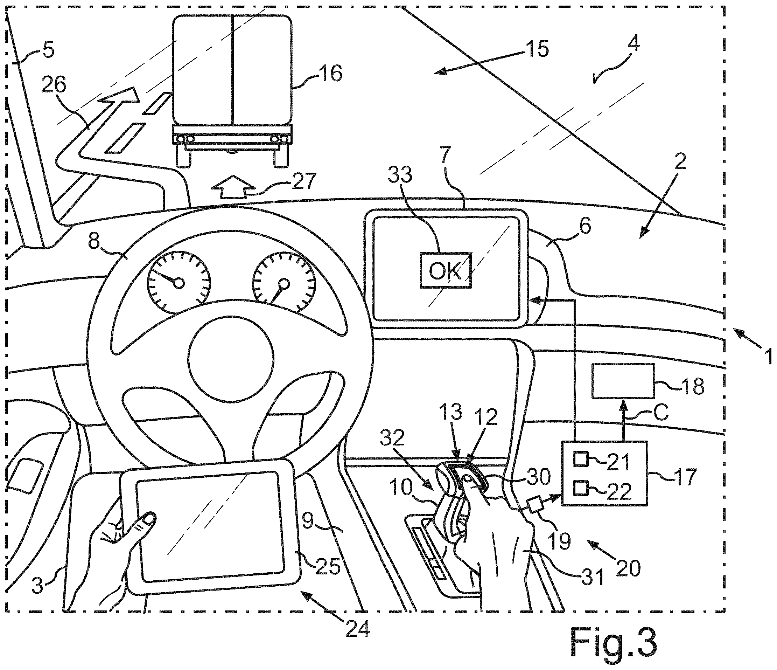

In Fig. 3 ist dargestellt, wie der Benutzer mit einem Bedienobjekt 31, beispielsweise seiner Hand, eine Bedienhandlung 32 an der Eingabefläche 12 durchführt. Die Steuereinrichtung 17 kann von der Bedieneinrichtung 20 die erkannte Bedienhandlung 32 empfangen. Die erkannte Bedienhandlung 32 kann beispielsweise durch die Steuereinrichtung 17 über die Ausgabeeinrichtung 7 dem Fahrer als Rückmeldung 33 signalisiert werden, also beispielsweise die Ausgabe: "OK" ausgegeben werden. Danach ist die Fahrsituation 15 durch die Entscheidung oder Auswahl des Benutzers dahingehend eindeutig, dass die Steuereinrichtung 17 nun das ausgewählte Fahrmanöver, das heißt hier das Überholmanöver 26, ausführen soll.

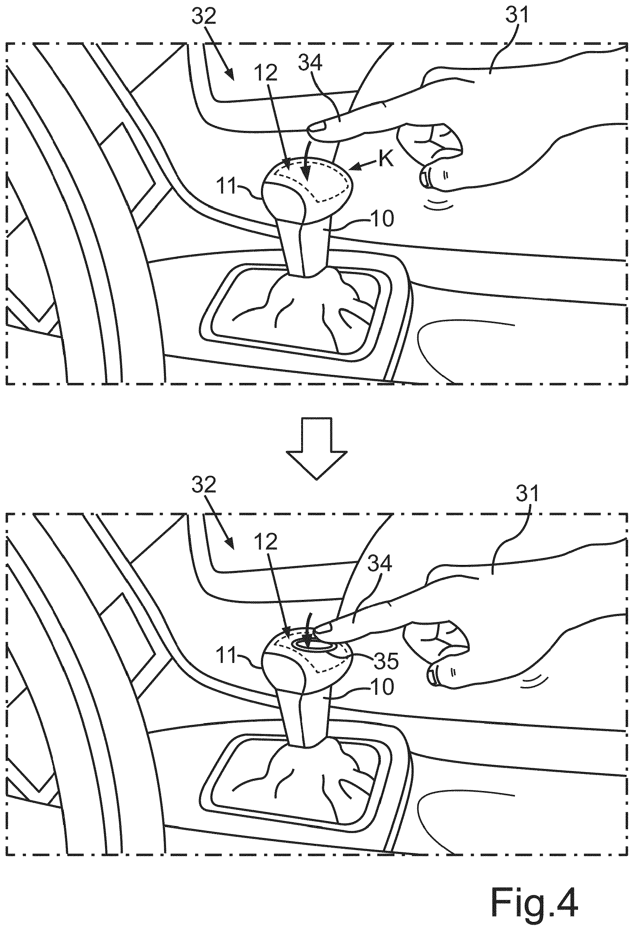

In Fig. 4 ist noch einmal die Bedienhandlung 32 als Bewegungsabfolge des Bedienobjekts 31 veranschaulicht. Beispielsweise mit einem Finger 34 kann der Benutzer sich der Eingabefläche 12 annähern und die Eingabefläche 12 an einer Berührstelle 35 berühren. Indem der Benutzer danach den Finger 34 wieder von der Eingabefläche 12 löst, ohne hierbei entlang der Eingabefläche 12 zu wischen, wird diese Bedienhandlung 32 ein Antippen oder Tap durch die Auswerteeinrichtung 19 erkannt.

In Fig. 4 ist des Weiteren veranschaulicht, dass die Eingabefläche 12 eine konvexe Krümmung K aufweisen kann, durch welche die Eingabefläche 12 in den Fahrzeuginnenraum 2 hineingewölbt ist. Hierdurch ergibt sich eine zusätzlich exponierte Lage oder Anordnung der Eingabefläche 12.

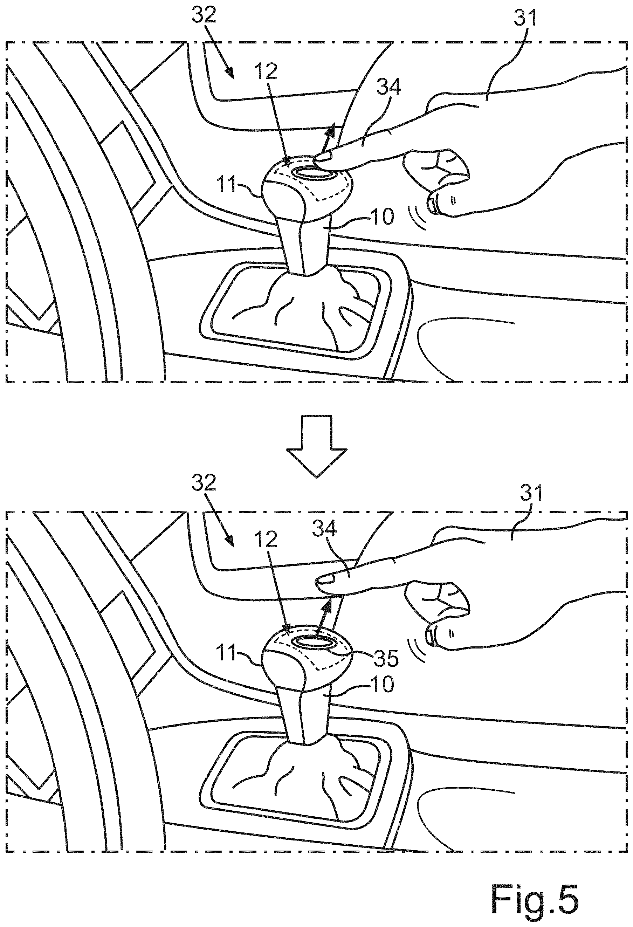

Fig. 5 veranschaulicht, wie der Benutzer eines Wischgeste oder ein Swipe nach rechts durchführen kann. Hierzu kann der Benutzer den Finger 34 auf der Eingabefläche 12 an der Berührstelle 35 ablegen und danach den Finger unter Beibehaltung der Berührung entlang der Eingabefläche 12 streichen. Diese Streichbewegung kann durch die Analyseeinrichtung oder Auswerteeinrichtung 19 als Wischbewegung nach rechts erkannt werden.

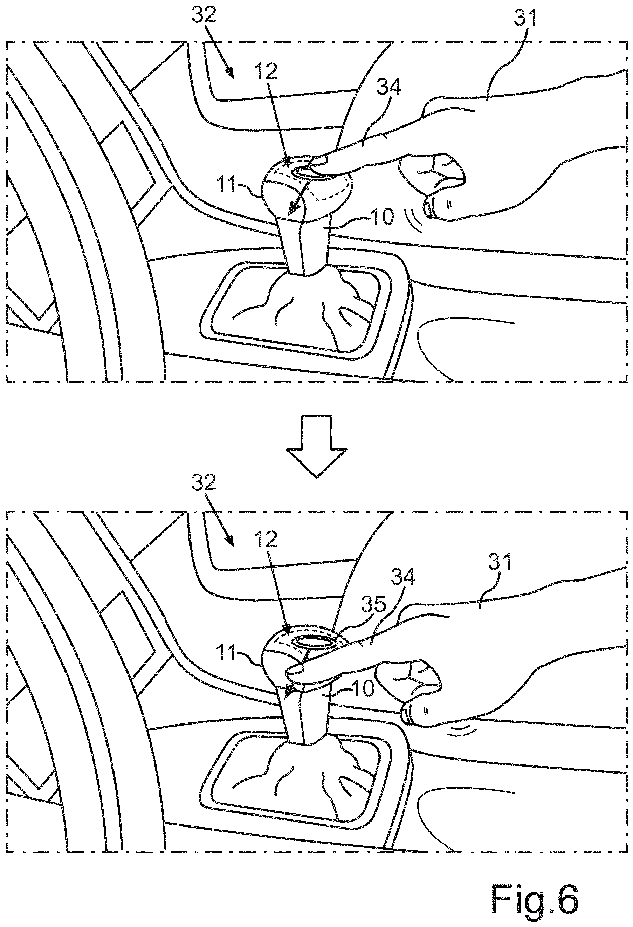

Fig. 6 zeigt in analoger Weise eine Wischbewegung nach links.

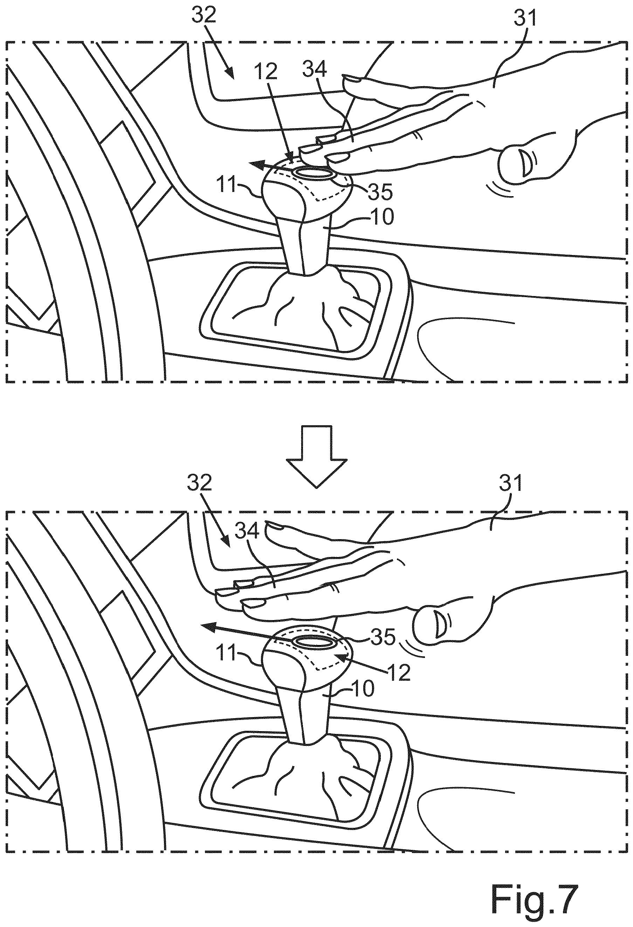

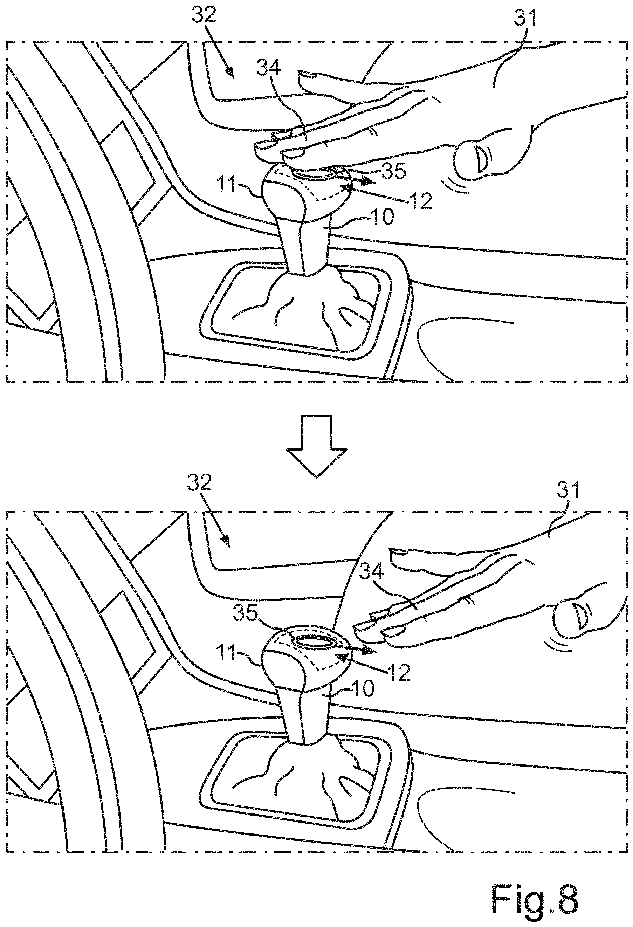

Fig. 7 zeigt eine Wischbewegung nach vorne. Fig. 8 zeigt eine Wischbewegung nach hinten. Wie in Fig. 7 und Fig. 8 veranschaulicht ist, kann für die Gesten an dem Berührort 35 mehr als ein Finger anliegen.

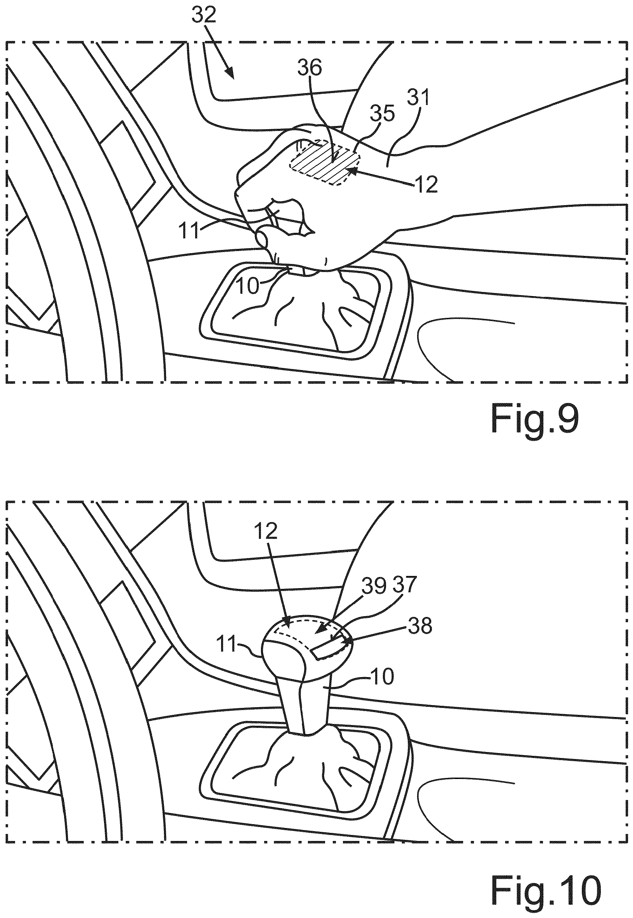

In Fig. 9 ist veranschaulicht, wie der Fahrer einen Wechsel von dem Fahrmodus 21 in den manuellen Fahrmodus 22 herbeiführen kann. Es kann vorgesehen sein, dass die Auswerteeinrichtung 19 eine Größe der Fläche des Berührorts 35 auswertet. Falls der Benutzer mit seiner Hand umgreift, kann der Berührort 35 beispielsweise die gesamte Fläche oder mehr als 70% der Eingabefläche 12 bedecken. Mit anderen Worten ist eine Berührfläche 36 der Hand auf der Eingabefläche 12 größer als ein vorbestimmter Schwellenwert. Dies kann der Steuereinrichtung 17 signalisiert werden. Die Steuereinrichtung 17 kann dazu ausgelegt sein, bei einem solchen Umgreifen des Griffes 11, bei welchem die Berührfläche 36 größer als der Schwellenwert ist, in den manuellen Zustand 22 zu wechseln. Zusätzlich kann vorausgesetzt werden, dass der Fahrer die Hand für eine vorbestimmte Mindestzeit, z.B. mehr als 1 Sekunde oder mehr als 2 Sekunden, auf der Eingabefläche ablegt.

Fig. 10 zeigt einen Gangwahlhebel 10, in dessen Griff 11 an einem Rand 37 einer berührungssensitiven Eingabefläche 12 eine erste Anzeigeeinrichtung 38 angeordnet sein kann. Die Anordnung Zusätzlich oder alternativ dazu kann eine zweite Anzeigeeinrichtung 39 in die Eingabefläche 12 integriert sein. Jede Anzeigeeinrichtung 38, 39 kann beispielsweise durch eine Pixel-Leuchtmatrix, z.B. als TFT-Bildschirm (TFT - Thin Film Transistor), gebildet sein.

Durch das Beispiel ist gezeigt, wie die Steuereinrichtung auf eine Überholmöglichkeit beispielsweise auf einer Autobahn reagiert. Der Fahrer fährt im hochautomatischen Zustand und beschäftigt sich mit einer Sekundäraufgabe. Vorne fährt ein langsamer Lastkraftwagen. Das System erkennt die Möglichkeit zu überholen. der Fahrer kann entscheiden, ob er die Aktion durchführen möchte. Bei einer positiven Entscheidung muss der Fahrer die Ausführung der Aktion bestätigen. Der Fahrer kann dann dem System mitteilen, dass er überholen möchte. In der derartigen Beispielsituationen kann eine Bestätigung der Entscheidung durch ein Bedienelement erfolgen. Eine besonders intuitive Steuerung des Systems im Kontext des hochautomatisierten Fahrens ist gegeben, indem eine berührungssensitive Eingabefläche auf den Schalthebel angeordnet ist. Der Fahrer braucht den Kontext seiner Sekundäraufgabe nicht verlassen, kann also in der Sekundäraufgabe bleiben und durch eine Touchaktion wie Swiping, Taping oder Ähnliches seine Entscheidungen dem System mitteilen. Dabei bleibt die Eingabefläche durch seine Platzierung in der Mittelkonsole auf dem Schalthebel stets für den Fahrer komfortabel erreichbar und bedienbar. Zusätzlich sind Leuchteffekte auf dem Schalthebel von Fahrer auch über peripheres Sehen zuverlässig wahrnehmbar.

Dem Fahrer wird also ein eigenes, getrenntes Bedienelement nur für die Steuerung des hochautomatischen Systems zur Verfügung gestellt, d.h. ein direktes unabhängiges Kontrollelement über das System. Ein zentrales Touch-Bedienelement befindet sich auf der Oberseite des Schalthebels. Die Platzierung des Bedienelements auf dem Lenkrad ist dagegen schwierig, da die Entfernung zum Lenkrad groß ist. Insbesondere nachdem es beim hochautomatischen/vollautomatischen Zustand eingefahren wurde, also vom Fahrer im Vergleich zum manuellen Fahrmodus wegbewegt wurde. Außerdem kann vorgesehen sein, dass das Lenkrad bewegt wird. Falls der Fahrer für seine Sekundäraufgabe einen großflächigen Gegenstand zur Hand nimmt, z.B. eine Zeitung, so ist das Lenkrad sogar hinter der Sekundäraufgabe verborgen.

Indem nur ein einziges Bedienelement verwendet wird, und nicht verschiedene Elemente, wird vermieden, dass der Fahrer situationsabhängig auf unterschiedliche Systemmeldungen mit einer Betätigung unterschiedlicher Bedienelemente reagieren muss, was dem Fahrer eine zusätzliche Entscheidung und Orientierung abverlangt. Diese Entscheidung wird dem Fahrer durch ein zentrales Touch-Bedienelement erspart. Er muss nur noch eine Entscheidung über die auszuführende Gestik treffen. Dadurch wird eine verwirrende und verunsichernde Mehrfachbelegung von Bedienelementen vermieden und das Wechseln oder Umsteigen von anderen Fahrzeugherstellern erleichtert.

In dem an dem zentralen Touch-Bedienelement Gestiken wie Taping, Swiping (Wischbewegung), Ein-/Zwei-/Mehr-Fingergestik ermöglicht ist, kann der Fahrer im Kontext des hochautomatischen Fahrens bleiben, d. h. der Fahrmodus muss nicht abgebrochen werden. Das Umfassen des Bedienelements ("Embrace") auf dem Schalthebel kann verwendet werden, um in den manuellen Modus zu wechseln, d. h. den hochautomatischen/vollautomatischen Fahrmodus zu verlassen. Durch eine Wischbewegung auf dem Bedienelement ist dem Fahrer die Möglichkeit gegeben, dem System seine Entscheidung mitzuteilen. Beispielsweise, wenn der Fahrer in gegebener Situation überholen (links vorbeifahren) möchte, kann er seine Entscheidung durch eine Wischbewegung nach links andeuten (Fig. 6). Andererseits wenn der Fahrer rechts abbiegen/von der Autobahn abfahren möchte, kann er seine Entscheidung durch eine Wischbewegung nach rechts mitteilen (Fig. 5). Durch ein Taping (einfach, zweifach, mehrfach, Long-Tap, d. h. Drücken anstelle von Tippen) könnte der Fahrer die Angebote des Systems ablehnen oder bestätigen. Ein Drücken länger als eine vorstehende Mindestzeitdauer (Long-Tap), kann sogar um ein haptisches Feedback ergänzt werden und eignet sich besonders gut für Bestätigungen der Manöver, die besondere Aufmerksamkeit/Prüfung der Gefahr durch den Fahrer verlangen.

Wenn der Fahrer durch einfache Gestiken die Bedieneinrichtung betätigen kann, kann er dies beispielsweise während des Bedienen eines mobilen Endgeräts oder Tablet-PCs tun, ohne hierdurch zu lange von der Bedienung des mobilen Endgeräts oder Tablet-PCs abgelenkt zu werden. Damit bleibt der im Nutzungskontext der Sekundäraufgabe. Dagegen verursacht eine Integration der Bedieneinrichtung in bestehende Bedienelemente, wie z. B. in Lenkradtasten, eine Pedalerie, so muss der Fahrer den Kontext seiner Sekundäraufgabe verlassen, d. h. zuviel Aufmerksamkeit der Bedieneinrichtung widmen.

Bevorzugt ist deshalb eine getrennte, eigenständige, zentrale Touchbedieneinrichtung für das hochautomatische/vollautomatische Verfahren vorgesehen. Es ermöglicht eine direkte, schnelle, benutzerfreundliche Kontrolle über die Steuereinrichtung für den automatischen Fahrmodus.

Das Touch-Bedienelement (d.h. Bedieneinrichtung 20) ermöglicht dem Fahrer die Interaktion mit dem Fahrassistenzsystem durch vielfältige Gestikarten: Zum Beispiel: Swiping, Taping, Double Tap, Drag (Ziehen), Rotate (Drehen), Pinch (Zusammenführen zweier Finger), Spread (Auseinanderbewegen zweier Finger), Embrace. Es kann auch zwischen Einem-, Zwei- und Mehrfingergestiken unterschieden werden. Durch die Möglichkeit der Touchsteuerung bleibt der Fahrer im digitalen Bedienkontext der Sekundäraufgabe, z. B. E-Mails auf seinem Tablet-PC schreiben, und muss nicht vollständig in das Bedienkonzept des Fahrzeug-Führens zurückgeholt werden, was beispielsweise bei einer Bedienung von Hebeln/Knöpfen am Lenkrad der Fall wäre.

Das Touch-Bedienelement ist auch immer an der gleichen Stelle zu finden und damit schneller lernbar/auffindbar. Es lässt sich stets gleichartig mit einfachen Touchgesten bedienen.

Die Integration des Touch-Bedienelements auf dem Schalthebel ermöglicht einen konstanten Weg zum Bedienelement und somit eine schnelle und bequeme Aktionsmöglichkeit. Hierbei wird auf die Beobachtung zurückgegriffen, dass viele erfahrene Fahrer ihre rechte Hand häufig auf dem Schalthebel ruhen lassen.

Mit dem Touch-Bedienelement kann nicht nur schnelle auf die Aufforderung des Systems reagiert werden, sondern noch eigene Entscheidungen mitgeteilt werden.

Alternativ kann das Touch-Bedienelement auch auf weiteren Elementen der Mittelkonsole angebracht sein. Ferner kann das Touch-Bedienelement gar ein eigenständiges Element der Mittelkonsole sein, welches nur die Funktion der Steuerung des Systems im hochautomatischen Kontext besitzt.

Die Positionierung der Eingabefläche auf dem Schalthebel weist allerdings den besonderen Vorteil auf, dass es vom Fahrer erreichbar ist, da er seine Sitzposition auf eine leichte Erreichbarkeit des Lenkrades, der Pedale also auch des Schalthebels eingestellt hat. Eine Anzeigeeinrichtung und/oder Leuchtfarben auf dem Schalthebel ist zudem von Fahrer auch über peripheres Sehen gut erkennbar.

Der Fahrer kann schnell auf eine Verkehrssituation reagieren und sich auf seine Entscheidung konzentrieren und muss sich nicht auf die Suche nach dem richtigen Bedienelement begeben.

Insgesamt zeigt das Beispiel, wie durch die Erfindung eine touchbasierte Manöversteuerung beim teilautomatischen/hochautomatischen/vollautomatischen Fahren vorteilhaft bereitgestellt werden kann.

## Patentansprüche

1. Kraftfahrzeug (1), aufweisend:
- eine Steuereinrichtung (17), die einen ersten Fahrmodus (21) aufweist, in welchem die Steuereinrichtung (17) selbsttätig eine Längsführung und/oder Querführung des Kraftfahrzeugs (1) durchführt, und
- eine Bedieneinrichtung (20), die dazu ausgelegt ist, an einer berührungssensitiven Eingabefläche (12) zumindest eine von einem Benutzer des Kraftfahrzeugs (1) mittels eines Bedienobjekts (31) durchgeführte Bedienhandlung (32) zu erfassen,
wobei
die Steuereinrichtung (17) dazu ausgelegt ist, in dem ersten Fahrmodus (21) zumindest eine Fahrsituation (15) zu detektieren, in welcher für einen Weiterbetrieb des ersten Fahrmodus (21) eine Entscheidung des Benutzers vorgesehen ist, und jeweils über die Eingabefläche (12) eine die Entscheidung des Benutzers betreffende Bedieneingabe zu empfangen, **dadurch gekennzeichnet, dass**
die Bedieneinrichtung (20) dazu ausgelegt ist, eine Größe eines gleichzeitig durch das Bedienobjekt (31) berührten Flächenbereichs (36) der Eingabefläche (12) zu ermitteln und in Abhängigkeit von der ermittelten Größe bei der Steuereinrichtung (17) den ersten Fahrmodus (21) zu deaktivieren und einen zweiten Fahrmodus (22), in welchem die Längsführung und die Querführung durch den Benutzer durchzuführen ist, zu aktivieren.

2. Kraftfahrzeug (1) nach Anspruch 1, wobei die Eingabefläche (12) neben einem Fahrersitz (3) des Kraftfahrzeugs (1) angeordnet ist.

3. Kraftfahrzeug (1) nach einem der vorhergehenden Ansprüche, wobei die Eingabefläche (12) in ein anderes Bedienelement (10) integriert ist.

4. Kraftfahrzeug (1) nach einem der vorhergehenden Ansprüche, wobei die Eingabefläche (12) an einem exponierten Ort im Kraftfahrzeug (1) angeordnet ist, wobei der Ort dadurch exponiert ist, dass die Eingabefläche (12) konvex (K) in einen Fahrzeuginnenraum (2) hinein gewölbt ist und/oder die Eingabefläche (12) an einem Trägerteil (10) angeordnet ist, das bezüglich einem das Trägerteil (10) umgebenden Verkleidungsteil (9) erhaben angeordnet ist.

5. Kraftfahrzeug (1) nach einem der vorhergehenden Ansprüche, wobei die Eingabefläche (12) in einen Griff (11) eines Gangwahlhebels (10) integriert ist.

6. Kraftfahrzeug (1) nach Anspruch 5, wobei die Eingabefläche (12) an einer Oberseite (13) der Griffs (11) angeordnet ist.

7. Kraftfahrzeug (1) nach einem der vorhergehenden Ansprüche, wobei die Bedieneinrichtung (20) dazu ausgelegt ist, mehrere unterschiedliche Bediengesten als jeweilige Bedienhandlung an der Eingabefläche (12) zu erkennen.

8. Kraftfahrzeug (1) nach einem der vorhergehenden Ansprüche, wobei eine Ausgabeeinrichtung (7) bereitgestellt und dazu eingerichtet ist, eine die vom Benutzer erwartete Entscheidung beschreibende Ausgabe (28) auszugeben.

9. Kraftfahrzeug (1) nach Anspruch 8, wobei die Ausgabeeinrichtung (7) dazu eingerichtet ist, einen die an der Eingabefläche (12) ausführbaren Bedienhandlungen beschreibenden Bedienhinweis (29) auszugeben.

10. Kraftfahrzeug (1) nach einem der vorhergehenden Ansprüche, wobei an der Eingabefläche (12) eine Leuchteinrichtung (30) bereitgestellt ist und die Steuereinrichtung (17) dazu ausgelegt ist, im ersten Fahrmodus (21) die Leuchteinrichtung (30) immer nur dann zu aktivieren, falls eine Fahrsituation (15) erkannt ist, in welcher eine Entscheidung des Benutzer vorgesehen ist.

11. Kraftfahrzeug (1) nach Anspruch 10, wobei die Leuchteinrichtung (30) einen die Eingabefläche (12) vollständig umrandender Leuchtstreifen aufweist.

12. Kraftfahrzeug (1) nach Anspruch 10 oder 11, wobei die Leuchteinrichtung (30) dazu ausgelegt ist, unterschiedliche Leuchtfarben zu erzeugen, und die Steuereinrichtung (17) dazu ausgelegt ist, in Abhängigkeit von der erkannten Fahrsituation (15) eine der Leuchtfarben auszuwählen und die ausgewählte Leuchtfarbe bei der Leuchteinrichtung (30) einzustellen.

13. Kraftfahrzeug (1) nach einem der vorhergehenden Ansprüche, wobei zumindest eine Anzeigeeinrichtung zum Anzeigen zumindest eines graphischen Objekts neben der Eingabefläche (12) angeordnet und/oder in die Eingabefläche (12) integriert ist.

14. Verfahren zum Betreiben eines Kraftfahrzeugs (1) nach einem der vorhergehenden Ansprüche, mit den Schritten:
- in einem ersten Fahrmodus (21) selbsttätig Durchführen eine Längsführung und/oder Querführung des Kraftfahrzeugs (1) durch die Steuereinrichtung (17) des Kraftfahrzeugs (1),
- im ersten Fahrmodus (21) Detektieren zumindest einer Fahrsituation (15), in welcher für einen Weiterbetrieb des ersten Fahrmodus (21) eine Entscheidung eines Benutzers des Kraftfahrzeugs (1) vorgesehen ist, und
- Erfassen einer von dem Benutzer mittels eines Bedienobjekts (31) durchgeführte Bedienhandlung (32) an einer berührungssensitiven Eingabefläche (12) durch eine Bedieneinrichtung (20), wobei die Bedieneingabe die Entscheidung des Benutzers betrifft,
- Ermitteln einer Größe eines gleichzeitig durch das Bedienobjekt (31) berührte Flächenbereichs der Eingabefläche (12),
- **gekennzeichnet durch**:
in Abhängigkeit von der ermittelten Größe Deaktivieren des ersten Fahrmodus (21) und Aktivieren des zweiten Fahrmodus (22), in welchem die Längsführung und die Querführung durch den Benutzer durchzuführen ist.

## Claims

1. Motor vehicle (1), having:
- a control device (17) that has a first driving mode (21) in which the control device (17) independently performs longitudinal guidance and/or transverse guidance of the motor vehicle (1), and
- an operating device (20) that is designed to detect at least one operating action (32) performed by a user of the motor vehicle (1) by way of an operating object (31) on a touch-sensitive input surface (12),
wherein
the control device (17) is designed, in the first driving mode (21), to detect at least one driving situation (15) in which a decision of the user is required for continuation of the first driving mode (21), and to receive an operating input relating to the decision of the user in each case via the input surface (12), **characterized in that**
the operating device (20) is designed to determine a size of a surface area (36) of the input surface (12) touched simultaneously by the operating object (31) and, on the basis of the determined size, to deactivate the first driving mode (21) at the control device (17) and to activate a second driving mode (22) in which longitudinal guidance and transverse guidance are to be performed by the user.

2. Motor vehicle (1) according to Claim 1, wherein the input surface (12) is arranged next to a driver's seat (3) of the motor vehicle (1).

3. Motor vehicle (1) according to either of the preceding claims, wherein the input surface (12) is integrated into another operating element (10).

4. Motor vehicle (1) according to one of the preceding claims, wherein the input surface (12) is arranged at an exposed location in the motor vehicle (1), wherein the location is exposed due to the input surface (12) being curved inwardly into a vehicle interior (2) in a convex manner (K) and/or the input surface (12) being arranged on a carrier part (10) that is arranged in a manner raised with respect to a cladding part (9) surrounding the carrier part (10).

5. Motor vehicle (1) according to one of the preceding claims, wherein the input surface (12) is integrated into a handle (11) of a gear selection lever (10).

6. Motor vehicle (1) according to Claim 5, wherein the input surface (12) is arranged on an upper side (13) of the handle (11).

7. Motor vehicle (1) according to one of the preceding claims, wherein the operating device (20) is designed to identify a plurality of different operating gestures as the respective operating action on the input surface (12) .

8. Motor vehicle (1) according to one of the preceding claims, wherein an output device (7) is provided and designed to output the output (28) describing the decision expected by the user.

9. Motor vehicle (1) according to Claim 8, wherein the output device (7) is designed to output an operating instruction (29) describing the operating actions able to be performed on the input surface (12).

10. Motor vehicle (1) according to one of the preceding claims, wherein a lighting device (30) is provided on the input surface (12) and the control device (17) is designed, in the first driving mode (21), to activate the lighting device (30) only whenever a driving situation (15) is identified in which a decision of the user is required.

11. Motor vehicle (1) according to Claim 10, wherein the lighting device (30) has a light-up strip completely surrounding the input surface (12).

12. Motor vehicle (1) according to Claim 10 or 11, wherein the lighting device (30) is designed to generate different lighting colours, and the control device (17) is designed to select one of the lighting colours on the basis of the identified driving situation (15) and to set the selected lighting colour on the lighting device (30).

13. Motor vehicle (1) according to one of the preceding claims, wherein at least one display device for displaying at least one graphical object is arranged next to the input surface (12) and/or integrated into the input surface (12).

14. Method for operating a motor vehicle (1) according to one of the preceding claims, having the steps of:
- in a first driving mode (21), independently performing longitudinal guidance and/or transverse guidance of the motor vehicle (1) using the control device (17) of the motor vehicle (1),
- in the first driving mode (21), detecting at least one driving situation (15) in which a decision of the user of the motor vehicle (1) is required for continuation of the first driving mode (21), and
- detecting an operating action (32) performed by the user by way of an operating object (31) on a touch-sensitive input surface (12) using an operating device (20), wherein the operating input relates to the decision of the user,
- determining a size of a surface area of the input surface (12) touched simultaneously by the operating object (31),
- **characterized by**:
on the basis of the determined size, deactivating the first driving mode (21) and activating the second driving mode (22) in which longitudinal guidance and transverse guidance are to be performed by the user.

## Revendications

1. Véhicule automobile (1), présentant :
- un dispositif de commande (17) qui présente un premier mode de conduite (21) dans lequel le dispositif de commande (17) effectue de façon autonome un guidage longitudinal et/ou un guidage transversal du véhicule automobile (1), et
- un dispositif de manœuvre (20) qui est conçu pour saisir sur une surface d'entrée tactile (12) au moins une action de manœuvre (32) effectuée par un utilisateur du véhicule automobile (1) au moyen d'un objet de manœuvre (31),
dans lequel
le dispositif de commande (17) est conçu pour détecter dans le premier mode de conduite (21) au moins une situation de conduite (15) dans laquelle une décision de l'utilisateur est prévue pour la suite du fonctionnement du premier mode de conduite (21), et pour recevoir respectivement par la surface d'entrée (12) une entrée de manœuvre concernant la décision de l'utilisateur,
**caractérisé en ce que** le dispositif de manœuvre (20) est conçu pour établir une dimension d'une zone de surface (36), touchée simultanément par l'objet de manœuvre (31), de la surface d'entrée (12), et en fonction de la dimension établie sur le dispositif de commande (17), pour désactiver le premier mode de conduite (21) et pour activer un deuxième mode de conduite (22) dans lequel le guidage longitudinal et le guidage transversal sont à effectuer par l'utilisateur.

2. Véhicule automobile (1) selon la revendication 1, dans lequel la surface d'entrée (12) est disposée à côté d'un siège de conducteur (3) du véhicule automobile (1).

3. Véhicule automobile (1) selon l'une quelconque des revendications précédentes, dans lequel la surface d'entrée (12) est intégrée dans un autre élément de manœuvre (10).

4. Véhicule automobile (1) selon l'une quelconque des revendications précédentes, dans lequel la surface d'entrée (12) est disposée à un endroit exposé dans le véhicule automobile (1), l'endroit étant exposé en ce que la surface d'entrée (12) présente une courbure convexe (K) vers l'intérieur d'un habitacle de véhicule (2), et/ou en ce que la surface d'entrée (12) est disposée sur une pièce de support (10) qui est disposée en relief par rapport à une pièce d'habillage (9) entourant la pièce de support (10).

5. Véhicule automobile (1) selon l'une quelconque des revendications précédentes, dans lequel la surface d'entrée (12) est intégrée dans un pommeau (11) d'un levier de sélection de vitesse (10).

6. Véhicule automobile (1) selon la revendication 5, dans lequel la surface d'entrée (12) est disposée sur une face supérieure (13) du pommeau (11).

7. Véhicule automobile (1) selon l'une quelconque des revendications précédentes, dans lequel le dispositif de manœuvre (20) est conçu pour reconnaître plusieurs gestes de manœuvre différents comme une action de manœuvre respective sur la surface d'entrée (12).

8. Véhicule automobile (1) selon l'une quelconque des revendications précédentes, dans lequel un dispositif de sortie (7) est fourni et aménagé pour délivrer une sortie (28) décrivant la décision attendue de la part de l'utilisateur.

9. Véhicule automobile (1) selon la revendication 8, le dispositif de sortie (7) étant aménagé pour délivrer une instruction de manœuvre (29) décrivant les actions de manœuvre pouvant être effectuées sur la surface d'entrée (12).

10. Véhicule automobile (1) selon l'une quelconque des revendications précédentes, dans lequel, sur la surface d'entrée (12), un dispositif lumineux (30) est fourni, et dans le premier mode de conduite (21), le dispositif de commande (17) est conçu pour activer le dispositif lumineux (30) uniquement si une situation de conduite (15) est reconnue dans laquelle une décision de l'utilisateur est prévue.

11. Véhicule automobile (1) selon la revendication 10, dans lequel le dispositif lumineux (30) présente une bande lumineuse encadrant entièrement la surface d'entrée (12).

12. Véhicule automobile (1) selon la revendication 10 ou 11, dans lequel le dispositif lumineux (30) est conçu pour produire différentes couleurs lumineuses, et le dispositif de commande (17) est conçu pour sélectionner l'une des couleurs lumineuses en fonction de la situation de conduite reconnue (15) et pour régler la couleur lumineuse sélectionnée sur le dispositif lumineux (30).

13. Véhicule automobile (1) selon l'une quelconque des revendications précédentes, dans lequel au moins un dispositif d'affichage pour afficher au moins un objet graphique à côté de la surface d'entrée (12) est disposé et/ou intégré dans la surface d'entrée (12).

14. Procédé d'exploitation d'un véhicule automobile (1) selon l'une quelconque des revendications précédentes, comprenant les étapes consistant à :
- dans un premier mode de conduite (21), effectuer de façon autonome un guidage longitudinal et/ou un guidage transversal du véhicule automobile (1) par le dispositif de commande (17) du véhicule automobile (1),
- dans le premier mode de conduite (21), détecter au moins une situation de conduite (15) dans laquelle une décision d'un utilisateur du véhicule automobile (1) est prévue pour poursuivre le fonctionnement du premier mode de conduite (21), et
- saisir une action de manœuvre (32) effectuée par l'utilisateur au moyen d'un objet de manœuvre (31) sur une surface d'entrée tactile (12) par un dispositif de manœuvre (20), l'entrée de manœuvre concernant la décision de l'utilisateur,
- établir une dimension d'une zone de surface, touchée simultanément par l'objet de manœuvre (31), de la surface d'entrée (12),
**caractérisé par** l'étape consistant à :
- en fonction de la dimension établie, désactiver le premier mode de conduite (21) et activer le deuxième mode de conduite (22) dans lequel le guidage longitudinal et le guidage transversal sont à effectuer par l'utilisateur.
